# EUROPEAN PATENT APPLICATION

(11) **EP 3 552 489 A1**
(43) Date of publication of application: **16.10.2019**
(21) Application number: 19250004.9
(22) Date of filing: 26.03.2019
(51) Int. Cl.: A01K 97/06

(54) **AN ANGLING SPOOL FOR FISHING LINE**

(30) Priority: 09.04.2018 GB 201805879
(71) Applicant: Korda Developments Ltd, Basildon, Essex SS14 OHW (GB)
(72) Inventor: Wolff, James Lewis, Near Frome, Somerset BA11 5HH (GB); Clarke, Damian Keith, Dedham, Colchester, Essex CO7 6DR (GB)
(74) Representative: Jones, Graham Henry

(57) **Abstract**

An angling spool (2) which is for fishing line and which comprises a handle (4), and the handle (4) being such that it has a use position which enables the handle (4) to be gripped and thereby to facilitate access to the angling spool (2) from a compartment (6) in a fishing tackle box (8) when the angling spool (2) is stored in the compartment (6) in the fishing tackle box (8).

## Description

This invention relates to an angling spool for fishing line.

Angling spools for fishing line are well known. The angling spools typically contain different types of fishing line, for example of different strengths and/or of different types of braid. The different types of fishing line are required for use for different types of fish. For example, the different types of fishing line may have different types of breaking strain for different types of fish. Alternatively or additionally, the different types of fishing line may have different types of constructions with different types of inner portions usually required for different types of strength, and different types of outer coatings usually required for improving abrasion resistance, anti-tangle and stiffness qualities. The outer coatings may also be used to camouflage the fishing line by means of colour.

The angling spools are usually stored in a compartment in a fishing tackle box. An angler selects a required type of spool as and when required. Often the angling spools are tightly packed in the compartment and an angler may have difficulty in accessing individual angling spools, for example initially to check what type of fishing line is on the angling spools, and then to remove a selected angling spool in order to obtain a length of the required fishing line.

It is an aim of the present invention to avoid or reduce the above mentioned problem.

Accordingly, in one non-limiting embodiment of the present invention, there is provided an angling spool which is for fishing line and which comprises a handle, and the handle being such that it has a use position which enables the handle to be gripped and thereby to facilitate access to the angling spool from a compartment in a fishing tackle box when the angling spool is stored in the compartment in the fishing tackle box.

The angling spool of the present invention is advantageous in that it enables the angling spool easily to be accessed when it is in the compartment in the fishing tackle box, and when it is present with a number of the angling spools and is therefore tightly packed in the compartment. The angling spool simply needs to be gripped by the handle. The angling spool can then be raised for inspection purposes so that the angler can ascertain the precise type of fishing line on the angling spool. A selected angling spool can then easily be removed for obtaining a required length of the fishing line from the angling spool.

The angling spool may be one in which the handle is a fixed handle.

Alternatively, the angling spool may be one in which the handle is a movable handle which is movable between the use position and a non-use position, and in which the non-use position is for when the angling spool is stored in the compartment in the fishing tackle box and is not required for use.

The movable handle may be movable by being pivotable between the use position and the non-use position. Alternatively, the movable handle may be movable by being slidable between the use position and the non-use position. Other constructions for the movable handle may be employed.

In all embodiments of the invention, the handle may be such that in the use position, the handle extends beyond a periphery of the angling spool. In this case, the angling spool is preferably one in which the handle extends beyond the periphery of the angling spool and in line with a side of the angling spool. Alternative constructions may be employed in which, for example, the handle extends other than in a line with a side of the angling spool and/or the handle extends at an angle to a side of the angling spool.

In all embodiments of the invention, the angling spool may be configured such that the handle is always at a top part of the angling spool when the angling spool is in the compartment in the fishing tackle box. In this case, the angling spool may have rectilinear sides. The angling spool may then typically be square or rectangular. The angling spool may alternatively be of another shape such for example as hexagonal or octagonal. The angling spool may still further be a circular or other non-rectilinear angling spool and, in this case, the angling spool may have a registration formation for ensuring that the handle is always at a top part of the angling spool when the angling spool is in the compartment of the fishing tackle box.

The angling spool may have flat side faces which are opposite one another and which form the major faces of the angling spool.

The angling spool may be one which comprises a spool member for receiving the fishing line, and first and second housing parts which locate together about the spool member, and wherein the handle is positioned on one of the first and second housing parts.

The angling spool of the present invention may or may not contain the fishing line.

Embodiments of the invention will now be described solely by way of example and with reference to the accompanying drawings in which:
Figure 1 is a perspective view of a base part of a fishing tackle box, and shows a plurality of first angling spools of the present invention in a compartment in the fishing tackle box;
Figure 2 is a perspective view from one side of one of the angling spools shown in Figure 1, and with a handle in a non-use position;
Figure 3 is a perspective view from the other side of the angling spool as shown in Figure 2;
Figure 4 is a perspective view like Figure 3 but shows the handle in a use position;
Figure 5 is an exploded view of the angling spool as shown in Figures 1 -4;
Figure 6 is a view like Figure 1 but shows a plurality of second angling spools of the present invention in the compartment in the fishing tackle box;
Figure 7 is a perspective view of one of the angling spools shown in Figure 6, and with a handle in a non-use position; and
Figure 8 is a perspective view of the angling spool as shown in Figure 7, but with the handle in a use position.

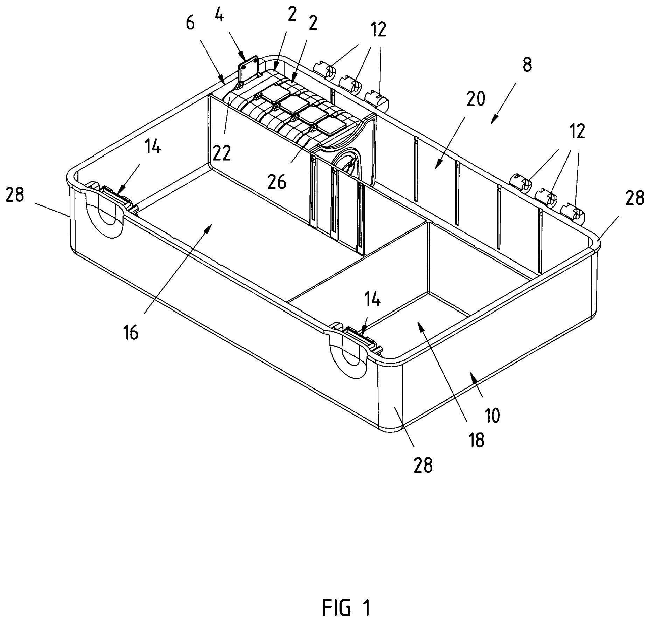

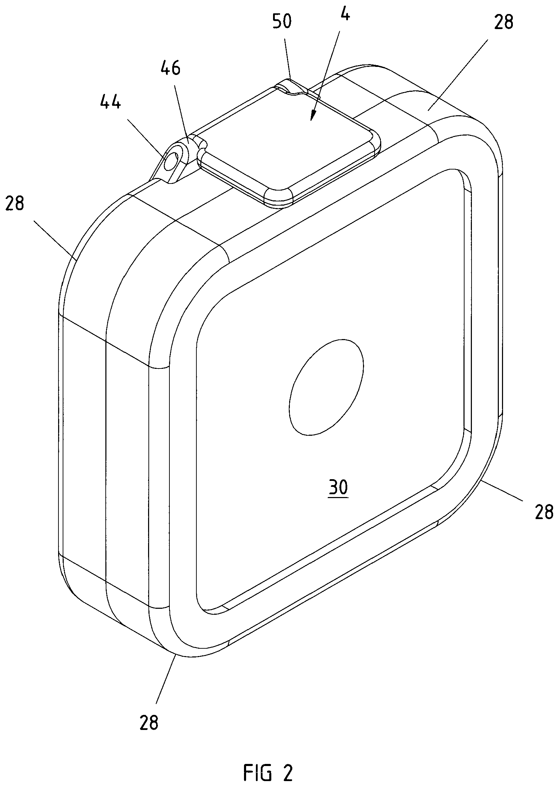

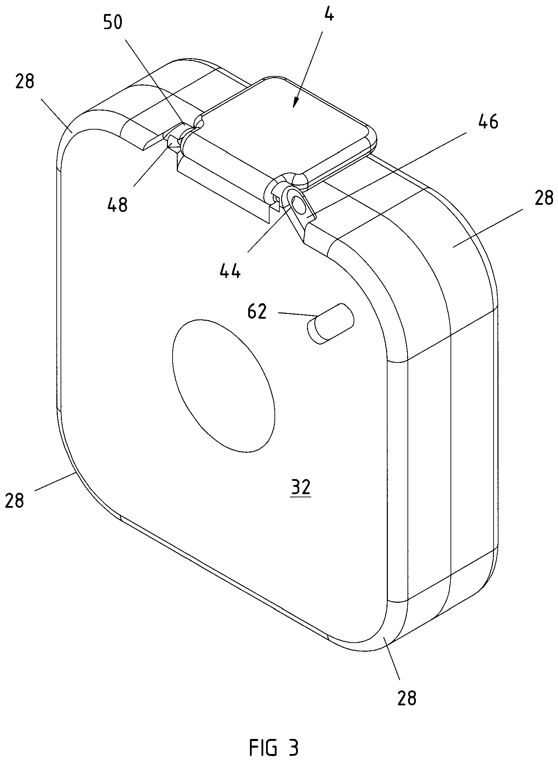

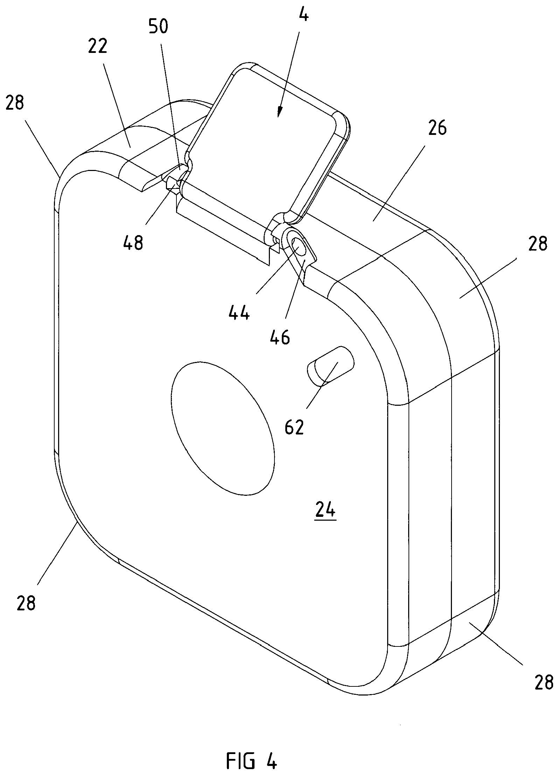

Referring to Figures 1 - 5, there is shown a first angling spool 2 which is for fishing line and which comprises a handle 4. The handle 4 is such that it has a use position which is shown in Figures 1 and 4 and which enables the handle 4 to be gripped and thereby to facilitate access to the angling spool 2 from a compartment 6 in a fishing tackle box 8. For simplicity of illustration, the fishing tackle box has been shown only with its base 10. The base 10 is provided with hinge parts 12 for enabling a lid to be hinged to the base 10. The lid snaps shut by connecting to closure formations 14 opposite the hinge parts 12 as shown.

The base 10 of the fishing tackle box 8 has other compartments 16, 18, 20 as shown. These compartments 16, 18, 20 are for other items of angling equipment. Generally, space in the base 10 of the fishing tackle box 8 is at a premium. This means that the compartment 6 is relatively small and, as can be seen from Figure 1, the compartment 6 is fully packed with the angling spools 2. Without the handle 4, an angler would have trouble in raising one of the angling spools 2 in order to check the information on the angling spool 2 as to the type of fishing line that the angling spool contains. The angler would also have trouble in removing the angling spool 2, for example for a closer inspection of the instructions and/or for removing a length of fishing line from the angling spool for use during angling. With the angling spool 2 of the present invention, this problem does not arise due to the provision of the handle 4.

The handle 4 is a movable handle 4 which is movable between the use position shown in Figures 1 and 4, and a non-use position as shown in Figures 1, 2 and 3. In order to facilitate a good undertaking of the handle 4, Figure 4 has been shown with the handle 4 part way between its use position as shown in Figure 1 and its non-use position as also shown in Figure 1. The non-use position is for when the angling spool 2 is stored in the compartment 6 in the fishing tackle box 8 and is not required for use, as can be appreciated from Figure 1.

As shown in Figures 1 and 4, the handle 4 extends beyond a periphery 22 of the angling spool 2 in the use position. In addition, the handle 2 extends in line with a side 24 of the angling spool 2.

The angling spool 2 is configured such that the handle 4 is always at a top part 26 of the angling spool 2 when the angling spool 2 is in the compartment 6 in the fishing tackle box 8. More specifically, the angling spool 2 has rectilinear sides and the angling spool 2 is basically square in shape although it has rounded corners 28. The fishing spool 2 also has a pair of flat side face 30, 32 which are opposite one another and which form the major faces of the angling spool 2.

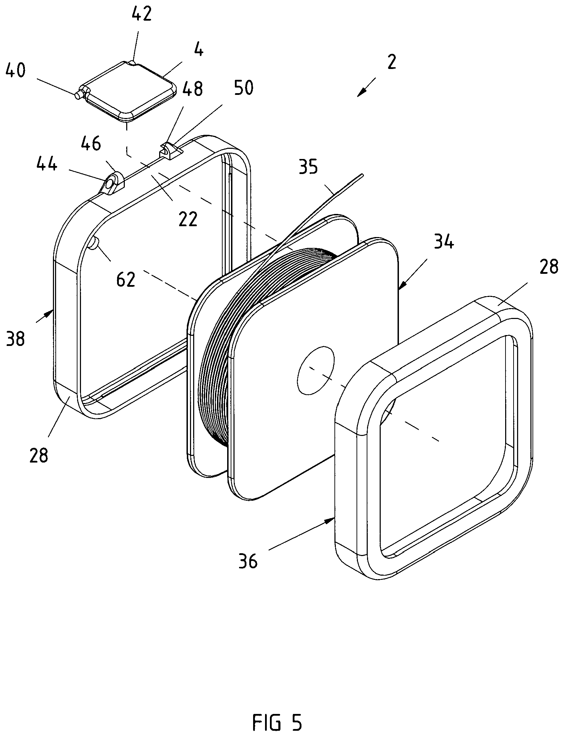

As shown in Figure 5, the angling spool 2 comprises a spool member 34 for receiving the fishing line 35. The angling spool 2 also comprises first and second housing parts 36, 38 respectively. The first and second housing parts 36, 28 locate together about the spool member 34 as can be appreciated from the exploded view of the angling spool 2 shown in Figure 5. The handle 4 is positioned on the second housing part 38.

The handle 4 is movable by being pivotable between the use position and the non-use position. The pivoting is facilitated by a pair of pivot members 40, 42. As can best be appreciated from Figure 5, the pivot member 40 locates in an aperture 44 in a lug 46 which upstands from the periphery 22 of the second housing part 38. The pivot member 42 locates in an open-sided recess 48 in a lug 50 which also upstands from the periphery 22 of the second housing part 38. In assembly, the pivot member 40 is first located in its aperture 44. The pivot member 42 is then easily pushed into its recess 48.

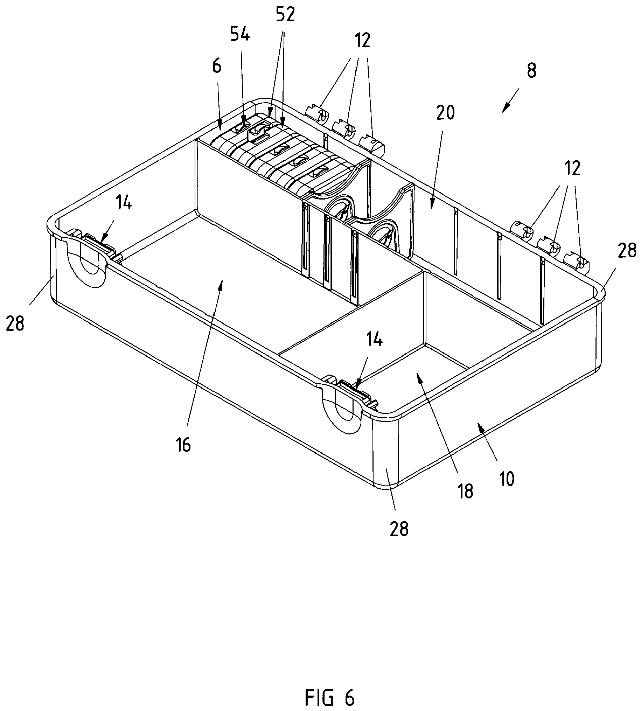

Referring now to Figures 6, 7 and 8 there is shown a second angling spool 52. Similar parts as in Figures 1 - 5 have been given the same reference numerals for ease of comparison and understanding.

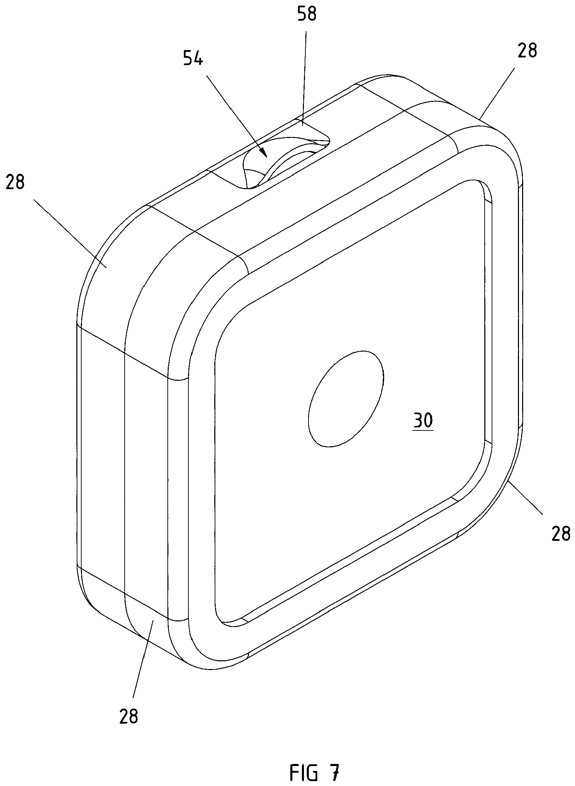

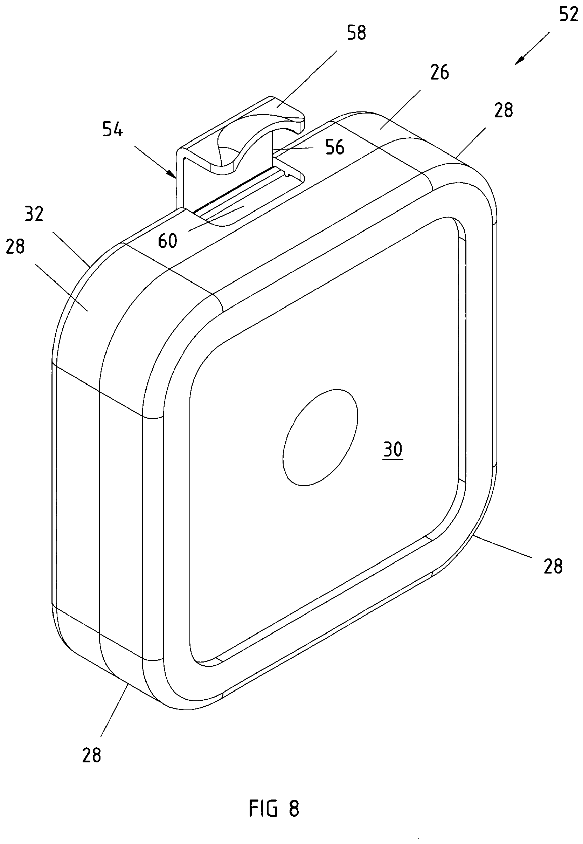

The angling spool 52 is such that it has a movable handle 54. The handle 54 is movable by being slidable between the use position and the non-use position. The non-use position is shown in Figures 6 and 7. The use position is shown in Figures 6 and 8. As can best be seen from Figure 8, the handle 54 slides in a recess 56 in the flat side face 32. The handle 54 has a bent over portion 58 which is able to be gripped by angler's fingers. The bent-over portion 58 locates in a recess 60 formed in the top part 26 of the angling spool 52.

The angling spools 2, 52 are both such that their sides 32 contain a window 62 for enabling an angler to see how much fishing line is on the spool member 34.

It is to be appreciated that the embodiments of the invention described above with reference to the accompanying drawings have been given by way of example only and that modifications may be effected. Thus, for example, the angling spools 2, 52 may be of a rectilinear shape other than the square shape shown. The handles 4, 54 may be movable by being of other construction than those shown. The handles 4, 54 may be fixed handles rather than movable handles. The angling spools may be made of any suitable materials, including plastics materials for enabling the angling spool to be moulded from the plastics materials. One or both flat side faces 30, 32 may contain information as to the type of fishing line in the angling spool and/or advertising information such for example as the name or logo of the manufacturer. The angling spool may contain various types of fishing line, including braided and non-braided fishing line. The fishing line, for example the braided fishing line, may contain different types of coatings. Individual components shown in the drawings are not limited to use in their drawings and they may be used in other drawings and in all aspects of the invention. The invention also extends to the individual components mentioned and/or shown above, taken singly or in any combination.

## Claims

1. An angling spool which is for fishing line and which comprises a handle, and the handle being such that it has a use position which enables the handle to be gripped and thereby to facilitate access to the angling spool from a compartment in a fishing tackle box when the angling spool is stored in the compartment in the fishing tackle box.

2. An angling spool according to claim 1 in which the handle is a fixed handle.

3. An angling spool according to claim 1 in which the handle is a movable handle which is movable between the use position and a non-use position, and in which the non-use position is for when the angling spool is stored in the compartment in the fishing tackle box and is not required for use.

4. An angling spool according to claim 3 in which the movable handle is movable by being pivotable between the use position and the non-use position.

5. An angling spool according to claim 3 in which the movable handle is movable by being slidable between the use position and the non-use position.

6. An angling spool according to any one of the preceding claims in which the handle is such that in the use position, the handle extends beyond a periphery of the angling spool in the use position.

7. An angling spool according to claim 6 in which the handle extends beyond the periphery of the angling spool and in line with a side of the angling spool.

8. An angling spool according to any one of the preceding claims in which the angling spool is configured such that the handle is always a top part of the angling spool when the angling spool is in the compartment in the fishing tackle box.

9. An angling spool according to claim 8 in which the angling spool has rectilinear sides.

10. An angling spool according to claim 8 or claim 9 in which the angling spool is square or rectangular.

11. An angling spool according to any one of the preceding claims in which the angling spool has a pair of flat side faces which are opposite one another and which form the major faces of the angling spool.

12. An angling spool according to any one of the preceding claim in which the angling spool comprises a spool member for receiving the fishing line, and first and second housing parts which locate together about the spool member, and wherein the handle is positioned on one of the first and second housing parts.

13. An angling spool according to any one of the preceding claims and including the fishing line.
